Europäisches Patentamt

European Patent Office

Office européen des brevets

(11) Veröffentlichungsnummer: **0 003 120**
**B1**

(12) **EUROPÄISCHE PATENTSCHRIFT**

(45) Veröffentlichungstag der Patentschrift:
**30.12.81**

(21) Anmeldenummer: **79100042.5**

(22) Anmeldetag: **08.01.79**

(51) Int. Cl.³: **C 08 F 6/00,** C 08 F 8/20,
**F 26 B 7/00, F 26 B 20/00**

(54) Verfahren und Anlage zur Trocknung von chlorierten Polymeren.

(30) Priorität: **11.01.78 DE 2800952**

(43) Veröffentlichungstag der Anmeldung:
**25.07.79 Patentblatt 79/15**

(45) Bekanntmachung des Hinweises auf die Patenterteilung:
**30.12.81 Patentblatt 81/52**

(84) Benannte Vertragsstaaten:
**BE DE FR GB NL**

(56) Entgegenhaltungen:
**FR-A-2 328 525**
**US-A-2 435 927**

(73) Patentinhaber: **HOECHST AKTIENGESELLSCHAFT,**
**Postfach 80 03 20, D-6230 Frankfurt/Main 80 (DE)**

(72) Erfinder: **Scholz, Manfred, Bonnstrasse 10, D-5030 Hürth (DE)**
Erfinder: **Kalser, Karl, Dr., Hubert-Geuer-Strasse 71, D-5040 Brühl (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren und Anlage zur Trocknung von chlorierten Polymeren

Die vorliegende Erfindung betrifft ein Verfahren zur Trocknung von aus einer wässerigen Aufschlämmung abgetrennten, feuchten chlorierten Polymeren, insbesondere chloriertem Polyäthylen, sowie eine Anlage zur Durchführung des erfindungsgemässen Verfahrens.

Chlorierte Polymere werden hergestellt, indem man chargenweise Polymere in wässeriger Suspension bei Temperaturen oberhalb 100°C chloriert. Nach Beendigung der Chlorierung entfernt man die gebildete Salzsäure, wäscht das chlorierte Polymere mehrmals mit kaltem Wasser und trennt es anschliessend vom Wasser, beispielsweise durch Filtrieren, ab (vgl. DE-OS Nr. 1595266). Die aus der wässerigen Suspension abgetrennten chlorierten Polymere enthalten noch 50 bis 70 Gew.% Wasser.

Beim Verfahren zum Trocknen von feuchtem Material nach der US-PS Nr. 2435927 wird feuchtes Material mit einem nach aussen begrenzten, schraubenförmig aufsteigenden Warmgasstrom in Berührung, gebracht und dabei getrocknet, indem das feuchte Material durch einen Heissgasstrom zunächst vertikal innerhalb des Warmgasstromes nach oben geschleudert wird, bis seine axiale Bewegungsrichtung in eine radiale umschlägt. Dann tritt zugleich eine durch die Schwerkraft bewirkte Trennung des Materials ein, indem die getrockneten leichteren Teilchen mit dem Warmgasstrom aufsteigen, während die noch feuchten gröberen Teilchen nach unten aus dem Warmgasstrom herausfallen. Die gröberen Teilchen werden zusammen mit weiterem feuchtem Material durch Heissgas erneut in den Warmgasstrom eingebracht. Zur Durchführung des Verfahrens wird eine Kolonne mit Bodenteil verwendet. Dabei weist die Kolonne in ihrem unteren Bereich einen seitlichen Warmgas-Eintrittsstutzen und an ihrem oberen Ende einen Austrittsstutzen auf. In das Bodenteil, welches einen seitlichen Stutzen zum Austritt der gröberen Teilchen aufweist, mündet von unten der Druckstutzen einer Zentrifugalschleuder und von der Seite ein Heissgasrohr ein.

Aus der FR-OS Nr. 2328525 ist ein Siebbodentrockner für vorwiegend nicht rieselfähiges Gut wie Müllkompost bekannt, welches aus einem zylindrischen Gehäuse besteht, in welchem ein als Kreisscheibe mit Öffnungen ausgebildeter Siebboden angeordnet ist. Der Siebboden ist zentral von einer Rührwerkswelle durchdrungen, welche oberhalb des Siebbodens ein aus zwei Rohren gebildetes Rührwerk trägt. In den oberen Teil des Gehäuses ragt ein zentral angeordnetes Zufuhrrohr hinein. In den unteren Teil des Gehäuses wird seitlich Warmluft eingeführt, welche nach Durchströmen des auf dem Siebboden gefindlichen Gutes das Gehäuse durch einen in seinem oberen Bereich angeordneten Auslass verlässt. Aus dem Siebbodentrockner abzuführendes Gut wird über einen Ausllassstutzen ausgetragen, wobei die den Auslassstutzen begrenzende Überlauföffnung durch eine Überlaufkante gebildet wird, welche mit Abstand oberhalb des Siebbodens endet. Dadurch ist der Raum zwischen Siebboden und Einflussebene des Rührwerks stets mit Gut beaufschlagt.

Will man die filterfeuchten Polymere mit Hilfe dieses Siebbodentrockners chargenweise trocknen, so muss bei jeder Charge mittels des Rührers immer wieder erneut eine Wirbelschicht aufgebaut werden. Diese Art der Trocknung hat den Nachteil, dass das den chlorierten Polymeren anhaftende Wasser durch vorgewärmtes Trocknungsgas entfernt werden muss. Seine Abtrennung durch Maschinen wie Zentrifugen, Dekanter oder Pressen ist wegen der Neigung der chlorierten Polymeren zu teilweise irreversibler Agglomerierung nicht möglich.

Andererseits wirkt die hohe Wasserbenetzung der filterfeuchten chlorierten Polymeren dem Aufbau einer Wirbelschicht entgegen. So bilden die feuchten chlorierten Polymere auf dem Siebboden des Trockners zunächst einen Schüttkegel, welcher von dem Rührer über den Siebboden verteilt wird. Das durch den Siebboden in den Trockner eingeblasene Trocknungsgas strömt bevorzugt durch den zunächst von den Polymeren nicht bedeckten Teil des Siebbodens, danach durch Kanäle und Spalte, die sich in den Polymeren ausbilden. Die Trocknung während dieser Phase ist nicht effektiv. Mit abnehmender Produktfeuchte und durch die Zerkleinerungswirkung des Rührers nimmt die Fluidisierung zu, und es kommt zu einem Aufbau einer Wirbelschicht in dem Trockner. Von diesem Zeitpunkt an arbeitet der Trockner erst unter optimalen Bedingungen, d.h. das eingeblasene Trocknungsgas wird gut ausgenutzt.

Durch die starke Beanspruchung des Rührers, besonders zu Beginn der Trocknungszeit, und wegen der möglichen Zusammenballung der feuchten Polymere muss dieser Apparateteil stark überdimensioniert ausgeführt sein und unterliegt einem starken Verschleiss.

Es ist daher Aufgabe der vorliegenden Erfindung, ein Verfahren zur Trocknung feuchter chlorierter Polymere sowie eine Anlage zu seiner Durchführung anzugeben, wobei die Befüll- und Trocknungszeit verkürzt, Trocknungsenergie eingespart, die Agglomerierung der feuchten Polymere verhindert sowie die Reparaturhäufigkeit der Trocknungsapparate verringert wird.

Das wird erfindungsgemäss dadurch erreicht, dass die von oben in eine Schleuderzone eingetragenen feuchten Polymere die Schleuderzone mit einer Geschwindigkeit von 10 bis 150 m/s auf spiralartigen Bahnen durcheilen, wobei die Beschleunigung der feuchten Polymere durch tangentiales Einblasen von Luft in den oberen Bereich der Schleuderzone erreicht wird; und dass die vorgetrockneten Polymere durch Einblasen von Luft in den unteren Bereich der Schleuderzone aus dieser ausgetragen und in den oberen Bereich einer nachgeschalteten Wirbelschichtzone mit darin aufrechterhaltener Wirbelschichtvorlage eingeführt und dort vollständig getrocknet werden.

Das Verfahren gemäss der Erfindung kann weiterhin wahlweise auch noch dadurch ausgestaltet
sein, dass:

a) die feuchten Polymere durch tangentiales
Einblasen von Luft in tiefer gelegene Bereiche der
Schleuderzone zusätzlich beschleunigt werden;

b) die spiralartigen Bahnen fest vorgegeben
sind;

c) die vorgetrockneten Polymeren in der Wirbelschichtzone durch Rühren zusätzlich bewegt werden.

Eine Anlage zur Durchführung des erfindungsgemässen Verfahrens kann einen mit einer verschliessbaren Austragsleitung und einen mit einem Rührer versehenen Wirbelschichttrockner
enthalten, wobei das Rührorgan des Rührers kurz
oberhalb des Anströmbodens des Wirbelschichttrockners endet und kann dadurch gekennzeichnet sein, dass strömungsmässig vor dem Wirbelschichttrockner eine Schleuderdüse angeordnet
ist, deren Austragsrohr in den oberen Bereich des
Wirbelschichttrockners einmündet, wobei die
Schleuderdüse einen exzentrisch angeordneten
Eintrittsstutzen aufweist, und wobei die Wand der
Schleuderdüse von einem oberen Gaszuführungsrohr spitzwinklig durchdrungen wird, und wobei
ein Teil der Wand der Schleuderdüse nach Art einer Filterpatrone flüssigkeitsdurchlässig ausgebildet ist, und wobei das Austragsrohr die Schleuderdüse nahe ihrem unteren Ende durchdringt und in
ihren Innenraum schräg abgeschnitten ist, und
wobei die Wand der Schleuderdüse auf der dem
Austragsrohr gegenüberliegenden Seite von einem zum Austragsrohr koaxial angeordneten unteren Gaszuführungsrohr durchdrungen ist.

Die Anlage kann wahlweise auch noch dadurch
weitergebildet sein, dass:

d) das obere Gaszuführungsrohr im Innenraum
der Schleuderdüse schräg abgeschnitten ist;

e) die Schleuderdüse einen den Bereich der Filterpatrone umgreifenden Ringraum, vorzugsweise
mit einem Prallring, aufweist;

f) die Schleuderdüse einen schrägen, flüssigkeitsdurchlässigen Boden aufweist, wobei sich
unterhalb des Bodens eine Kammer befindet, und
wobei das Austragsrohr mit dem Boden fluchtet;

g) durch den Boden des Wirbelschichttrockners
neben einer Gaszuführungsleitung eine weitere
Gaszuführungsleitung hindurchgeführt ist, welche zur Begasung des Rührers unterhalb des Anströmbodens in einem Kasten endet.

Beim erfindungsgemässen Verfahren kann die in
die Schleuderzone angeblasene Luft einen Druck
von 2 bis 16 bar aufweisen und bis auf 200° C vorgewärmt sein.

Beim Verfahren gemäss der Erfindung wird die
Schleuderzone in der Regel drucklos beschickt.
Sie kann aber auch, um die abgeschleuderte
Feuchte besser nach aussen wegzutreiben, mit einem Überdruck von 1 mbar bis 1 bar betrieben
werden.

Beim erfindungsgemässen Verfahren werden
die feuchten chlorierten Polymere in der Schleuderzone in eine spiralförmige Bahn katapultiert,
wobei sie durch die radiale Beschleunigung ihre
Feuchtigkeit abgeben, ohne dass die Polymerteilchen gegeneinander einem mechanischen Druck
ausgesetzt werden.

Beim Verfahren gemäss der Erfindung kann die
zum Austrag der vorgetrockneten Polymere aus
der Schleuderzone verwendete Luft einen Druck
von 1,5 bis 5 bar aufweisen, während das zum
Aufbau der Wirbelschicht in die Wirbelschichtzone eingeblasene Trockengas, insbesondere
Luft, Drucke von 1,01 bis 1,3 bar und Temperaturen von 50 bis 150° C aufweisen kann. Dabei wird
das Trockengas vorteilhaft im Kreislauf geführt
und die Feuchte daraus durch Kondensation oder
durch Absorption entfernt.

Beim erfindungsgemässen Verfahren werden
die in der Schleuderzone kontinuierlich vorgetrockneten chlorierten Polymere in der Wirbelschichtzone quasi-kontinuierlich getrocknet, indem sie auf eine im Trockner permanent vorhandene Wirbelschichtvorlage aufgebracht werden.
Die dadurch zunehmende Höhe der Wirbelschicht
wird nach Beendigung einer Trocknungsperiode
durch Entnahme von getrocknetem Material wieder auf die ursprüngliche Höhe der Wirbelschicht
verringert.

Bei der Anlage zur Durchführung des erfindungsgemässen Verfahrens kann im Innenraum
der Schleuderdüse eine Schneckenwendel eingebaut sein, durch welche die Führung der feuchten
Polymerteilchen auf spiralartigen Bahnen begünstigt wird.

In der beigefügten Zeichnung ist eine Anlage zur
Durchführung des erfindungsgemässen Verfahrens schematisch dargestellt. Dabei zeigen:

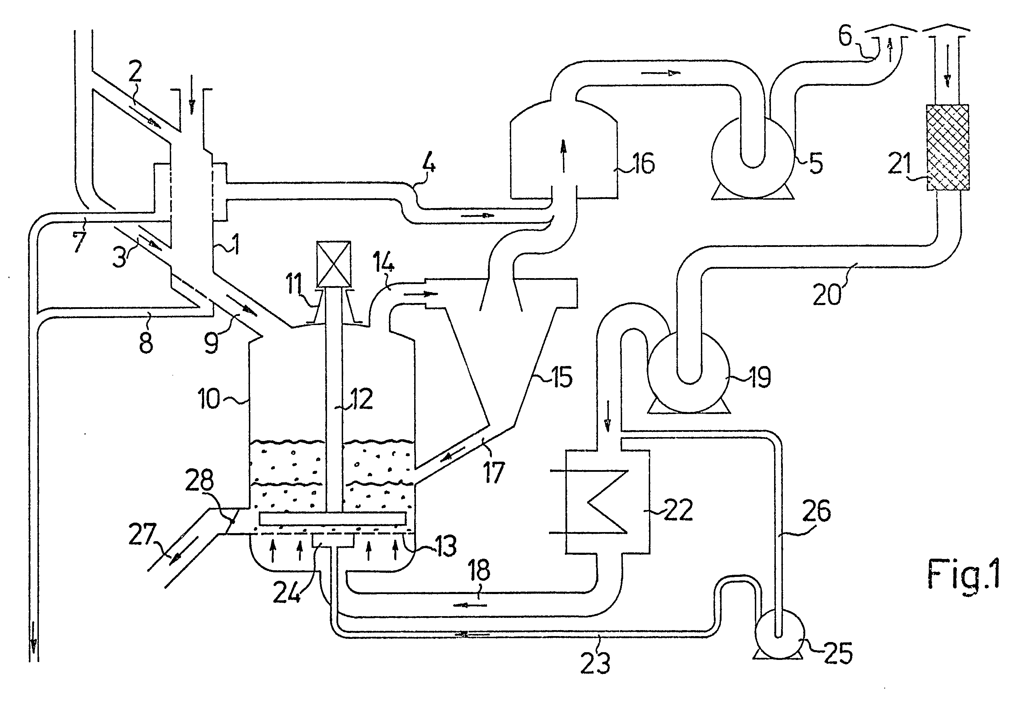

Fig. 1 eine Seitenansicht — teilweise im Schnitt
— auf die Anlage,

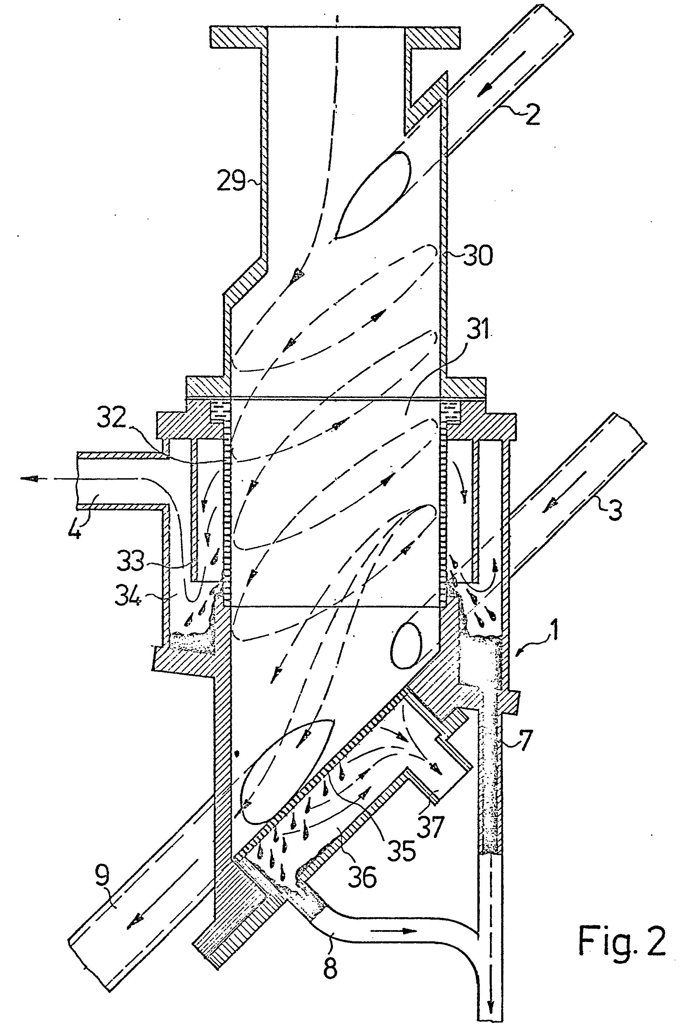

Fig. 2 eine Seitenansicht auf die Schleuderdüse
im Schnitt.

Eine Schleuderdüse 1 ist mit Gaszuführungsrohren 2, 3, einer Gasabführungsleitung 4 und mit
Ablaufleitungen 7, 8 versehen. Dabei mündet die
Gasabführungsleitung 4 in eine Wasserwäsche 16
ein, welche ihrerseits mit einem Gebläse 5 verbunden ist, das mit einem Kamin 6 in Verbindung steht.
Vom unteren Ende der Schleuderdüse 1 geht ein
Austragsrohr 9 ab, welches den Deckel eines Wirbelschichttrockners 10 durchdringt. Auf dem Dekkel des Wirbelschichttrockners 10 ist eine
Laterne 11 befestigt, welche einen Rührer 12 trägt,
dessen Rührorgan sich im Wirbelschichttrockner
10 kurz oberhalb eines Anströmbodens 13 befindet. Der Deckel des Wirbelschichttrockners 10
wird von einem weiteren Rohr 14 durchdrungen,
welches zu einem Zyklon 15 führt. Der Zyklon 15
ist gasströmungsmässig mit der Wasserwäsche 16
verbunden, während die im Zyklon 15 abgeschiedenen Polymerteilchen über ein Rohr 17 in
den Wirbelschichttrockner 10 rückgeführt werden. In den Boden des Wirbelschichttrockners 10
mündet eine Gaszuführungsleitung 18 ein, welche
durch ein weiteres Gebläse 19, in dessen Saugleitung 20 sich ein Luftfilter 21 befindet, und einem Wärmeaustauscher 22 mit vorgewärmtem Gas beaufschlagbar ist. Durch den Boden des Wirbelschichttrockners 10 ist eine weitere Gaszuführungsleitung 23 hindurchgeführt, welche in einem Luftkasten 24 zum Einblasen von Spülluft für den Rührerschaft durch den Anströmboden 13 im Bereich der Rührerwelle endet. Die Gaszuführungsleitung 23 ist durch ein weiteres Gebläse 25, dessen Saugleitung 26 in die Druckleitung des Gebläses 19 mündet, mit Pressgas beaufschlagbar. Vom unteren Bereich des Wirbelschichttrockners 10 geht eine Austragsleitung 27 ab, welche durch eine Klappe 28 verschliessbar ist.

Die Schleuderdüse 1 weist einen exzentrisch angeordneten Eintrittsstutzen 29 für die feuchten Polymere auf. Das Gaszuführungsrohr 2 durchdringt die Wand 30 der Schleuderdüse 2 spitzwinklig und ist im Innenraum 31 der Schleuderdüse 1 schräg abgeschnitten. Ein Teil der Wand 30 ist nach Art einer Filterpatrone 32 flüssigkeitsdurchlässig ausgebildet, wobei die die Filterpatrone 32 durchdringende Flüssigkeit nach Ablenkung durch einen vertikalen Prallring 33 in einem Ringraum 34 gesammelt wird, dessen Boden von der Ablaufleitung 7 durchdrungen ist. Der obere Bereich des Ringraumes 34 ist mit der Gasabführungsleitung 4 verbunden. Die Schleuderdüse 1 weist einen schrägen, flüssigkeitsdurchlässigen Boden 35 auf, unterhalb dessen sich eine Kammer 36 befindet, von deren tiefsten Stelle die Ablaufleitung 8 abgeht. Weiterhin weist die Kammer 36 einen Abgasstutzen 37 auf. Die Schleuderdüse 1 wird nahe ihrem unteren Ende von dem Austragsrohr 9 durchdrungen, welches im Innenraum 31 schräg abgeschnitten ist und mit dem Boden 35 fluchtet. Auf der dem Austragsrohr 9 gegenüberliegenden Seite wird die Wand 30 von dem Gaszuführungsrohr 3 durchdrungen, welches koaxial zum Austragsrohr 9 angeordnet ist.

*Beispiel:*

Chloriertes Polyäthylen mit einem Wassergehalt von 51 Gew.% wird zur Vortrocknung in die Schleuderzone eingebracht und mit Hilfe von Pressluft auf 30 m/s beschleunigt. Der Wassergehalt des chlorierten Polyäthylens beträgt beim Austritt aus der Schleuderzone nur noch 22 Gew.%.

Zum Anfahren wird in der Wirbelschichtzone trockenes, abgesiebtes, chloriertes Polyäthylen etwa 1 m hoch vorgelegt und durch Einblasen von 500 Nm³ Luft/min eine Wirbelschicht erzeugt und aufrechterhalten. Auf diese Wirbelschicht werden kontinuierlich Chargen von vorgetrocknetem chloriertem Polyäthylen (2000 bis 4000 kg/h) mit Hilfe von unter einem Vordruck von 4 bar stehender Luft (10 Nm³/min) verteilt. Zusätzlich wird das chlorierte Polyäthylen durch Rühren bewegt.

Die zur Aufrechterhaltung der Wirbelschicht dienende Luft ist auf 1,08 bar verdichtet und in einem Wärmeaustauscher mit Wasserdampf als Heizmedium auf 100 bis 120°C erwärmt worden.

Die wasserdampfhaltige Abluft wird nach Passieren einer Wasserwäsche in die Atmosphäre abgeleitet.

Aus der Wirbelschichtzone wird nach Fertigtrocknung kontinuierlich die jeweils eingefahrene Chargenmenge getrocknetes chloriertes Polyäthylen mit einer Restfeuchte von etwa 0,2 Gew.% entnommen, welches frei von Agglomeraten ist.

In der Wirbelschichtzone verbleibt nach der Entnahme des fertiggetrockneten chlorierten Polyäthylens eine zur Aufrechterhaltung der Wirbelschicht erforderliche Menge dieses Materials. Auf die aufrechterhaltene Wirbelschicht wird anschliessend eine neue Charge von vorgetrocknetem chloriertem Polyäthylen aufgefahren und fertiggetrocknet.

## Patentansprüche

1. Verfahren zur Trocknung von aus einer wässerigen Aufschlämmung abgetrennten, feuchten chlorierten Polymeren, insbesondere chloriertem Polyäthylen, dadurch gekennzeichnet, dass die von oben in eine Schleuderzone eingetragenen feuchten Polymere die Schleuderzone mit einer Geschwindigkeit von 10 bis 150 m/s auf spiralartigen Bahnen durcheilen, wobei die Beschleunigung der feuchten Polymere durch tangentiales Einblasen von Luft in den oberen Bereich der Schleuderzone erreicht wird; und dass die vorgetrockneten Polymere durch Einblasen von Luft in den unteren Bereich der Schleuderzone aus dieser ausgetragen und in den oberen Bereich einer nachgeschalteten Wirbelschichtzone mit darin aufrechterhaltener Wirbelschichtvorlage eingeführt und dort vollständig getrocknet werden.

2. Verfahren nach Anspruch 1, dadurch gekennzeichnet, dass die feuchten Polymere durch tangentiales Einblasen von Luft in tiefer gelegene Bereiche der Schleuderzone zusätzlich beschleunigt werden.

3. Verfahren nach Anspruch 1 oder 2, dadurch gekennzeichnet, dass die spiralartigen Bahnen fest vorgegeben sind.

4. Verfahren nach einem der Ansprüche 1 bis 3, dadurch gekennzeichnet, dass die vorgetrockneten Polymeren in der Wirbelschichtzone durch Rühren zusätzlich bewegt werden.

5. Anlage zur Durchführung des Verfahrens nach einem der Ansprüche 1 bis 4, enthaltend einen mit einer verschliessbaren Austragsleitung (27) und einen mit einem Rührer (12) versehenen Wirbelschichttrockner (10), wobei das Rührorgan des Rührers (12) kurz oberhalb des Anströmbodens (13) des Wirbelschichttrockners (10) endet, dadurch gekennzeichnet, dass strömungsmässig vor dem Wirbelschichttrockner (10) eine Schleuderdüse (1) angeordnet ist, deren Austragsrohr (9) in den oberen Bereich des Wirbelschichttrockners (10) einmündet, wobei die Schleuderdüse (1) einen exzentrisch angeordneten Eintrittsstutzen (29) aufweist, und wobei die Wand (30) der Schleuderdüse (1) von einem oberen Gaszuführungsrohr (2) spitzwinklig durchdrungen wird, und wobei ein Teil der Wand (30) der Schleuderdüse (1) nach Art einer Filterpatrone (32) flüssigkeitsdurchlässig ausgebildet ist, und wobei das Austragsrohr (9) die Schleuderdüse (1) nahe ihrem unteren Ende durchdringt und in ihren Innenraum (31) schräg abgeschnitten ist, und wobei die Wand (30) der Schleuderdüse (1) auf der dem Austragsrohr (9) gegenüberliegenden Seite von einem zum Austragsrohr (9) koaxial angeordneten unteren Gaszuführungsrohr (3) durchdrungen ist.

6. Anlage nach Anspruch 5, dadurch gekennzeichnet, dass das obere Gaszuführungsrohr (2) im Innenraum (31) der Schleuderdüse (1) schräg abgeschnitten ist.

7. Anlage nach Anspruch 5 oder 6, dadurch gekennzeichnet, dass die Schleuderdüse (1) einen den Bereich der Filterpatrone (32) umgreifenden Ringraum (34), vorzugsweise mit einem Prallring (33), aufweist.

8. Anlage nach einem der Ansprüche 5 bis 7, dadurch gekennzeichnet, dass die Schleuderdüse (1) einen schrägen, flüssigkeitsdurchlässigen Boden (35) aufweist, dass sich unterhalb des Bodens (35) eine Kammer befindet, und dass das Austragsrohr (9) mit dem Boden (35) fluchtet.

9. Anlage nach einem der Ansprüche 5 bis 8, dadurch gekennzeichnet, dass durch den Boden des Wirbelschichttrockners (10) neben einer Gaszuführungsleitung (18) eine weitere Gaszuführungsleitung (23) hindurchgeführt ist, welche zur Begasung des Rührers (12) unterhalb des Anströmbodens (13) in einem Kasten (24) endet.

### Claims

1. Process for drying moist chlorinated polymers, especially chlorinated polyethylene, which are separated from an aqueous suspension, which comprises: Introducing the moist polymers from above into a centrifugal zone and flowing them therethrough at a velocity of 10 to 150 cm/s along helical lines, the flow velocity being produced by the injection of air into the upper portion of the centrifugal zone, tangentially with respect thereto; removing the predried polymers from the centrifugal zone by injecting air into the base portion of said zone, introducing them into the upper portion of a fluidization zone, and completely drying the polymers therein, the fluidization zone being arranged downstream of the centrifugal zone and containing a bed of fluidized material which is continually maintained.

2. Process as claimed in claim 1, wherein the flow velocity of the moist polymers is additionally increased by the injection of air into lower portions of the centrifugal zone, tangentially with respect thereto.

3. Process as claimed in claim 1 or 2, wherein the moist polymers are passed through the centrifugal zone along predetermined helical lines.

4. Process as claimed in any of claims 1 to 3, wherein the predried polymers introduced into the fluidization zone are additionally agitated.

5. Apparatus for carrying out the process as claimed in any of claims 1 to 4, comprising a fluidized bed drier (10) provided with a closable discharge outlet (27) and with an agitator (12), the agitating element of the agitator (12) terminating at a short separation above the receiving plate (13) of the fluidized bed drier (10), characterized in that a centrifugal nozzle structure (1) is disposed upstream of the fluidized bed drier (10) so as to open with its discharge outlet (9) into the upper portion of the fluidized bed drier (10), the centrifugal nozzle structure (1) being provided with an eccentrically arranged inlet (29), the wall (30) of the centrifugal nozzle structure (1) having an upper tubular gas supply line (2) passed therethrough at an acute angle, a portion of the wall (30) of the centrifugal nozzle structure (1) being permeable to liquid matter and acting like a filtering shell (32), the tubular outlet (9) having an obliquely cut end portion opening into the interior (31) of the centrifugal nozzle structure (1) near the lower end thereof, and the wall (30) of the centrifugal nozzle (1) having a lower gas supply line (3) passed through it at its side opposite the tubular outlet (9) and coaxially with respect thereto.

6. Apparatus as claimed in claim 5, characterized in that the upper tubular gas supply line (2) is formed with an end portion obliquely cut off in the interior (31) of the centrifugal nozzle structure (1).

7. Apparatus as claimed in claim 5 or 6, characterized in that the centrifugal nozzle structure (1) is formed with an annular chamber (34), preferably a baffle plate (33) encircling the region of the filtering shell (32).

8. Apparatus as claimed in any of claims 5 to 7, characterized in that the tubular nozzle structure (1) is formed with an oblique bottom (35) permeable to liquid matter, and with a chamber below the bottom (35), the tubular discharge outlet (9) being in alignment with the bottom (35).

9. Apparatus as claimed in any of claims 5 to 8, characterized in that the bottom of the fluidized bed drier (10) has passed through it a gas supply line (18) and a further gas supply line (23) terminating in a chest-shaped structure (24) below the receiving plate (13) and supplying gas to the agitator (12).

### Revendications

1. Procédé pour sécher des polymères chlorés humides retirés d'une suspension aqueuse, en particulier du polyéthylène chloré, caractérisé en ce que les polymères humides sont introduits d'en haut dans une zone de projection et traversent cette zone à une vitesse de 10 à 150 m/s suivant des parcours en spirale, l'accélération des polymères humides étant produite par insufflation tangentielle d'air dans la région supérieure de la zone de projection; et que les polymères préséchés sont déchargés de la zone de projection par insufflation d'air dans la région inférieure de cette zone et sont introduits dans la région supérieure d'une zone à couche fluidisée prévue à la suite et dans laquelle est maintenue une base de couche fluidisée, où ils sont séchés complètement.

2. Procédé selon la revendication 1, caractérisé en ce que les polymères humides sont accélérés en plus par insufflation tangentielle d'air dans des régions de la zone de projection situées plus bas.

3. Procédé selon la revendication 1 ou 2, caractérisé en ce que les parcours en spirale sont déterminés au préalable.

4. Procédé selon l'une des revendications 1 à 3, caractérisé en ce que les polymères préséchés sont déplacés en plus par agitation dans la zone à couche fluidisée.

5. Installation pour la mise en œuvre du procédé selon l'une des revendications 1 à 4, comprenant un sécheur à couche fluidiséee (10) muni d'une conduite de décharge (27) obturable et d'un agitateur (12), l'organe d'agitation de l'agitateur (12) se terminant à une faible hauteur au-dessus du fond perforé (13) d'arrivée de gaz du sécheur (10), caractérisée en ce qu'une tuyère de projection (1) est disposée en amont du sécheur (10) et débouche avec son tuyau de décharge (9) dans la région supérieure du sécheur (10), la tuyère (1) présentant une tubulure d'entrée (29) excentrée, la paroi (30) de la tuyère (1) étant traversée sous un angle aigu par un tuyau d'alimentation en gaz supérieur (2), une partie de la paroi (30) de la tuyère (1) étant perméable au liquide et agissant à la façon d'une cartouche filtrante (32), le tuyau de décharge (9) traversant la tuyère (1) près de son extrémité inférieure et étant coupé en biais à son intérieur (31) et la paroi (30) de la tuyère (1) étant traversée, sur le côté opposé au tuyau de décharge (9), par un tuyau d'alimentation en gaz inférieur (3) qui est coaxial au tuyau de décharge (9).

6. Installation selon la revendication 5, caractérisée en ce que le tuyau d'alimentation en gaz supérieur (2) est coupé en biais à l'intérieur (31) de la tuyère (1).

7. Installation selon la revendication 5 ou 6, caractérisée en ce que la tuyère (1) possède une chambre annulaire (34), pourvue de préférence d'un anneau de rebondissement (33), qui entoure la région formant la cartouche filtrante (32).

8. Installation selon l'une des revendications 5 à 7, caractérisée en ce que la tuyère (1) possède un fond oblique (35) perméable au liquide, en ce qu'une chambre est située sous le fond (35) et en ce que le tube de décharge (9) est aligné avec le fond (35).

9. Installation selon l'une des revendications 5 à 8, caractérisée en ce que le fond du sécheur (10) est traversé, à côté d'une conduite d'alimentation en gaz (18), par une conduite supplémentaire d'alimentation en gaz (23) qui se termine dans un caisson (24) sous le fond perforé (13) pour l'amenée de gaz à l'agitateur (12).

Fig.1

0003120

Fig. 2